Europäisches Patentamt

European Patent Office

Office européen des brevets

(11) Numéro de publication: **0 278 082**
**A1**

## (12) DEMANDE DE BREVET EUROPEEN

(21) Numéro de dépôt: **87118169.9**

(51) Int. Cl.⁴: **B60C 27/08**

(22) Date de dépôt: **08.12.87**

(30) Priorité: **22.01.87 FR 8700734**

(43) Date de publication de la demande:
**17.08.88 Bulletin 88/33**

(84) Etats contractants désignés:
**AT BE CH DE ES FR GB GR IT LI LU NL SE**

(71) Demandeur: **AMCA**
**100, Rue Petit**
**F-75019 Paris(FR)**

(72) Inventeur: **Lafuge, Christian**
**24, Avenue Centrale**
**F-92700 Colombes(FR)**

(74) Mandataire: **Casalonga, Axel et al**
**BUREAU D.A. CASALONGA - JOSSE**
**Morassistrasse 8**
**D-8000 Munich 5(DE)**

(54) Dispositif de jonction pour raccorder plusieurs brins de chaines anti-patinage.

(57) Dispositif de jonction pour les brins de chaînes anti-patinage, comprenant un anneau (4) en acier et, à l'intérieur de ce dernier, un croisillon (5) constitué par deux plaquettes d'acier (6). rectangulaires, coudées, présentant des échancrures (8) aux extrémités libres de leurs branches (7) et assemblées dos à dos par soudures, les échancrures (8) chevauchant l'anneau (4) depuis l'intérieur.

FIG.1

EP 0 278 082 A1

## DISPOSITIF DE JONCTION POUR RACCORDER PLUSIEURS BRINS DE CHAINES ANTI-PATINAGE.

La présente invention se rapporte à un dispositif de jonction pour raccorder plusiers brins de chaîne, pour la réalisation de chaînes anti-patinage maillées, notamment pour des engins de déneigement, comprenant un anneau en acier auquel sont raccordés les brins de chaîne.

Les anneaux de jonction connus, de forme torique pour de telles chaînes présentent l'inconvénient d'être plats et peu agressifs, donc de ne pas participer de façon notable à la fonction de la chaîne anti-patinage, c'est-à-dire d'augmenter l'accrochage sur le sol. En outre, l'anneau dans son ensemble et notamment les premiers maillons des brins de chaîne qui s'y trouvent raccordés sont exposés à l'usure.

La présente invention a pour objet un dispositif de jonction du type défini ci-dessus qui, tout en étant d'une fabrication simple, assure une bonne agressivité sur sol glissant et une bonne protection contre l'usure de l'anneau ainsi que des maillons de chaîne raccordés à ce dernier.

L'invention a également pour objet un dispositif de jonction du type défini ci-dessus sur lequel les éléments exposés à l'usure peuvent être remplacés d'une manière simple et rapide.

Le dispositif de jonction conforme à l'invention pour raccorder plusieurs brins de chaîne, pour la réalisation de chaînes anti-patinage maillées, notamment pour des engins de déneignement, comprend, à l'intérieur d'un anneau en acier auquel sont raccordés les brins de chaîne, un croisillon constitué de deux plaquettes d'acier rectangulaires ayant une longueur supérieure au diamètre intérieur de l'anneau et une largeur supérieure au diamètre de la section de l'anneau et coudées à angle droit au milieu de leur longueur, chaque plaquette présentant à l'extrémité libre de chacune de ses deux branches une échancrure de largeur au moins égale au diamètre de la section de l'anneau et de profondeur supérieure audit diamètre. Les deux plaquettes sont accolées dos à dos et assemblés par soudure par le côté extérieur de leur coude, les extrémités libres échancrées de leurs branches chevauchant l'anneau l'intérieur.

Ce croisillon qui dépasse l'anneau de jonction sur les deux côtés de ce dernier empêche l'anneau ainsi que les maillons de la chaîne raccordée à l'anneau d'entrer en contact le sol, et prévient ainsi une usure de ces éléments. De par sa constitution, ce croisillon qui est en contact avec le sol par les tranches des plaquettes présente une bonne agressivité sur sol glissant. La formation du croisillon à partir de deux plaquettes coudées, assemblées par soudage à l'intérieur de l'anneau, permet une fabrication simple du dispositif de jonction dans son ensemble. En effet, il suffit d'engager l'une des plaquettes à l'intérieur de l'anneau, de manière que les extrémités libres échancrées de ses deux branches chevauchant à fond l'anneau, d'introduire ensuite une seconde plaquette en position inversée à l'intérieur de l'anneau, de manière que les extrémités libres échancrées de ses branches chevauchent l'anneau, d'amener les deux plaquettes dos à dos par le côté extérieur de leur coude, et de les réunir par soudage. Le croisillon est alors maintenu de façon imperdable dans l'anneau sans être solidaire de ce dernier.

Pour simplifier le remplacent du croisillon en cas d'usure, il est avantageux d'assembler les deux plaquettes coudées par deux soudures réalisées, de part et d'autre de l'anneau, sur les deux parties extérieures seulement de la largeur des plaquettes.

Ainsi, l'usure du croisillon affecte également les deux soudures et réduit progressivement la solidité de l'assemblage entre les deux plaquettes, de sorte que lorsqu'un croisillon est usé sur les deux côtés, les deux soudures le sont également, ce qui fait que les deux plaquettes peuvent alors être facilement séparées l'une de l'autre, par exemple par un coup de marteau, et être retirées de l'anneau pour être remplacées par deux plaquettes neuves.

Pour améliorer dans ce cas la solidité de l'assemblage entre les deux plaquettes, il est avantageux de prévoir, dans les deux plaquettes, aux deux extrémités du coude de chaque plaquette, un chanfrein ou une échancrure permettant une meilleure pénétration de la soudure.

En se référant aux dessins annexés, on va décrire ci-après plus en détail un mode de réalisation illustratif et non limitatif d'un dispositif de jonction conforme à l'invention; sur les dessins :

la figure 1 est une vue en perspective d'un dispositif de jonction comprenant un anneau et un croisillon disposé à l'intérieur de cet anneau;

la figure 2 est une vue en plan du dispositif de la figure 1 et des départs de quatre brins de chaîne raccordés à ce dispositif.

Le dispositif de jonction 1 tel qu'illustré par les dessins est destiné par exemple à raccorder entre eux les maillons d'extrémité 2 de quatre brins de chaîne 3 faisant partie d'une chaîne anti-patinage maillée, par exemple pour les roues d'un engin de déneigement.

Le dispositif de jonction 1 comprend un anneau 4 fermé en acier, et un croisillon 5 disposé librement, mais de façon imperdable à l'intérieur de l'anneau 4.

Le croisillon 5 est formé de deux plaquettes rectangulaires 6 d'acier, de longueur comprise entre le diamètre intérieur et le diamètre extérieur de l'anneau et de largeur supérieure au diamètre de la section de l'anneau 4, chaque plaquette 6 étant coudée à angle droit au milieu de sa longueur. Les deux branches 7 de chaque plaquette 6 coudée présentent, à leur extrémité libre, une échancrure 8 de largeur légèrement supérieure au diamètre de la section de l'anneau 4 et d'une profondeur nettement supérieure audit diamètre.

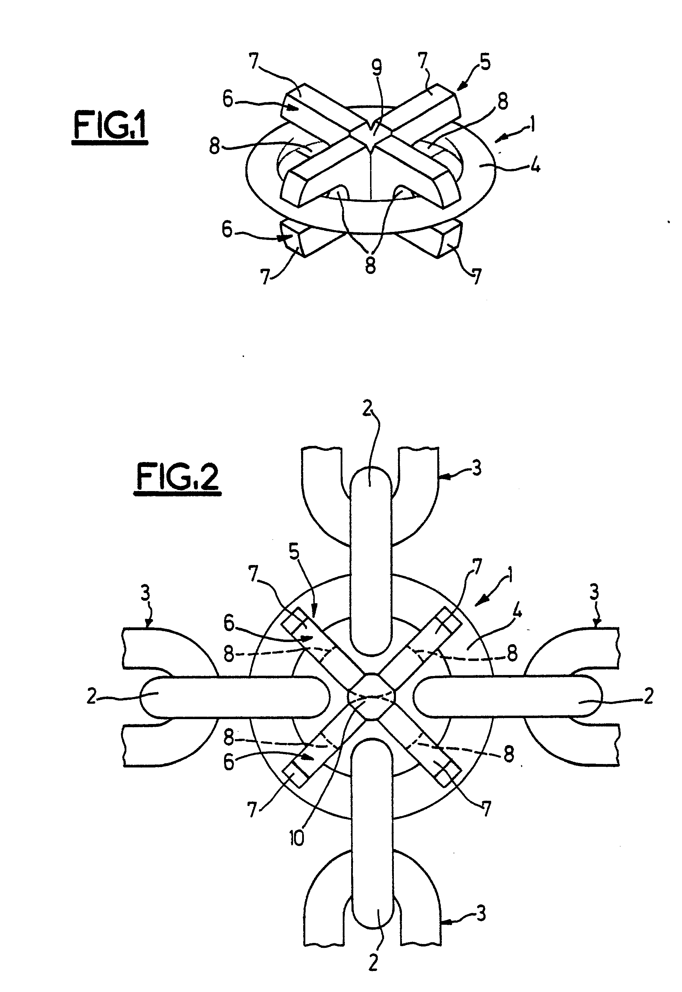

Comme le montre la figure 1, chacune des deux plaquettes 6 présente, aux deux extrémités de son coude sur le côté extérieur du coude, un chanfrein ou une échancrure 9.

Pour le montage du croisillon 5 à l'intérieur de l'anneau 4, on engage d'abord une plaquette coudée 6 à l'intérieur de l'anneau 4 de manière que les échancrures 8 de ses branches 7 chevauchent l'anneau 4 à fond depuis l'intérieur. On introduit ensuite la seconde plaquette coudée 6 à l'intérieur de l'anneau, et on accole les deux plaquettes 6 dos à dos par le côté extérieur de leur coude (figure 1). On assemble les deux plaquettes 6 dans cette position à l'aide de deux soudures 10 effectuées depuis les côtés opposés de l'anneau 4 à l'endroit des deux évidements constitués entre les deux plaquettes 6 par les chanfreins ou échancrures 9.

Le croisillon 5 ainsi assemblé à l'intérieur de l'anneau 4 n'est pas solidarisé avec l'anneau 4, mais ne peut plus s'échapper de ce dernier, grâce au fait que les échancrures 8 de ces quatre branches 6 chevauchent l'anneau 4 de l'intérieur.

Le croisillon 5 qui dépasse l'anneau 4 sur les deux côtés de ce dernier protège l'anneau 4 contre l'usure. Il en est de même en ce qui concerne les premiers maillons 2 des brins de chaîne 3, dans la mesure où la hauteur du croisillon 5 (largeur des plaquettes constituant le croisillon 5) est supérieure à la hauteur de ces maillons 2. En raison de sa réalisation à partir de plaquettes formées d'acier plat, le croisillon présente une bonne agressivité sur sol glissant notamment sur sol enneigé, ce qui améliore l'effet d'anti-patinage de la chaîne comportant des dispositifs de jonction conformes à l'invention sur la surface de roulement des pneus d'engins équipés de telles chaînes.

L'usure du croisillon 5 affecte également la soudure 10 se trouvant du côté du sol. Lorsque cette usure a atteint un degré déterminé, il est possible de retourner la chaîne de manière que le côté opposé du croisillon 5 soit également soumis à l'usure.

Lorsque les croisillons 5 ont subi un degré d'usure prédéterminé sur les deux côtés, il y a intérêt à les remplacer. A cet effet, il suffit d'exercer par exemple un coup de marteau sur chaque croisillon pour désolidariser les deux plaquettes à l'endroit des deux soudures 10 usées, de retirer ensuite les deux plaquettes, d'introduire de nouvelles plaquettes à l'intérieur de l'anneau 4 et de les assembler par deux soudures pour disposer de nouveau d'un anneau équipé d'un croisillon neuf.

## Revendications

1. Dispositif de jonction pour raccorder plusieurs brins de chaîne, en vue de la réalisation de chaînes anti-patinage maillées, notamment pour des engins de déneigement, comprenant un anneau en acier auquel sont raccordés les maillons d'extrémité des brins de chaîne, caractérisé par le fait qu'il comprend, à l'intérieur de l'anneau (4) un croisillon (5) formé de deux plaquettes d'acier (6) rectangulaires de longueur supérieure au diamètre intérieur de l'anneau et de largeur supérieur au diamètre de la section de l'anneau et coudées à angle droit au milieu de leur longueur, chaque plaquette présentant à l'extrémité libre de chacune de ses branches (7), une échancrure (8) de largeur au moins égale au diamètre de la section de l'anneau et de profondeur supérieure audit diamètre, les deux plaquettes étant accolées dos à dos, et assemblées par le côté extérieur de leur coude, les extrémité libres échancrées de leurs branches chevauchant l'anneau de l'intérieur.

2. Dispositif suivant la revendication 1, caractérisé par le fait que les deux plaquettes (6) sont assemblées par soudure sur les deux côtés de l'anneau sur les deux parties d'extrémité seulement de la largeur des plaquettes.

3. Dispositif suivant la revendication 2, caractérisé par le fait que les deux plaquettes (6) présentent aux deux extrémités de leur coude un chanfrein ou une échancrure (9) améliorant la pénétration des soudures (10).

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 353 430 (PENGG-WALENTA) * En entier * --- | 1 | B 60 C 27/08 |
| A | FR-A-2 218 210 (EISEN UND DRAHTWERK ERLAU AG) * En entier * ----- | 1 | |

**DOMAINES TECHNIQUES RECHERCHES (Int. Cl.4)**

B 60 C
F 16 G

Le présent rapport a été établi pour toutes les revendications

| Lieu de la recherche | Date d'achèvement de la recherche | Examinateur |
|---|---|---|
| LA HAYE | 26-04-1988 | PIRIOU J.C. |